Europäisches Patentamt

European Patent Office

Office européen des brevets

(11) Publication number: **0 355 297**
**A1**

## (12) EUROPEAN PATENT APPLICATION

(21) Application number: **89110920.9**

(22) Date of filing: **16.06.89**

(51) Int. Cl.⁴: **B29C 49/06 , B65D 83/38 ,
//B29K67:00**

(30) Priority: **17.06.88 ZA 884342**

(43) Date of publication of application:
**28.02.90 Bulletin 90/09**

(84) Designated Contracting States:
**AT BE CH DE ES FR GB GR IT LI LU NL SE**

(71) Applicant: **KOHLER PACKAGING LIMITED
Kohler House 4 Pybus Road Wierda Valley
Sandton Transvaal Province(ZA)**

(72) Inventor: **Kerpert, Thomas Georg
c/o Kohler Packaging Ltd Kohler House 4
Pybus Rd
Wierda Valley Sandton Transvaal
Province(ZA)**

(74) Representative: **Türk, Gille, Hrabal
Bruckner Strasse 20
D-4000 Düsseldorf 13(DE)**

(54) Method of making an aerosol container.

(57) A method of manufacturing an aerosol container (10) of synthetic plastics material is disclosed in which a pre-form is injection moulded in an injection moulding machine. The pre-form has a neck portion (12) and a body portion (14). Prior to blowing the pre-form in a blowing machine, the neck portion (12) of the pre-form is heated and then enclosed in a cavity bounded by two shells and a plug which enters the neck portion (12) of the pre-form. The softened neck portion of the pre-form is moulded to the shape of said cavity. The degree to which the neck portion is heated causes it to heat-set. Thereafter the body portion (14) of the pre-form is heated and blown into the form of a container in a chilled mould. As a final step the blown container is reheated in a mould which has heated walls. The container is maintained under positive internal pressure to prevent it collapsing inwardly as its temperature is raised to relieve stresses therein. Finally, whilst the container is in the mould, water or other liquid is sprayed onto the inner surface of said body to shock cool it.

THIS INVENTION relates to a method of making an aerosol container of synthetic plastics material.

In this specification the term aerosol container is to be interpreted as designating a container which has a mouth and, extending peripherally of the mouth, a rim which is adapted to have an aerosol container top secured thereto by crimping, and which container, when closed by the container top, is able to withstand the pressure of an aerosol propellant.

## BACKGROUND OF THE INVENTION

Aerosol containers are almost exclusively made of metal eg tinplate and aluminium, although suppliers of aerosol containers have recently begun to show an interest in the use of synthetic plastics material such as PET and Nylon. Applicants are aware of a manufacturing process in which synthetic plastics material is injection moulded onto mandrels to produce pre-forms each of which has a neck portion and a body portion. The mandrels form part of a turntable. Whilst on the mandrels the pre-forms are conveyed past heating and cooling means which adjusts the temperatures of said portions to the desired level. Each mandrel and pre-form is then enclosed in a mould and air is blown in through the mandrel to stretch mould the body portion. The container is then stripped from the mould.

The fact that all the method stages take place in a single machine on a turntable means that it is not possible for the best possible parameters to be selected for each stage. For example, dwell times of certain duration are necessary at various stages. As the desired dwell times are not all the same as one another, some must be undesirably shortened and others undesirably lengthened thereby to arrive at a compromise situation. The resultant product is not entirely satisfactory. For example the rim may not be properly formed which means that the container top can come off the neck. Furthermore the body may not be properly heat stabilised and can bulge if subjected to temperatures of, say, 70 degrees Celcius. Temperatures of this magnitude can easily be reached in a closed motor vehicle standing in the sun.

With the present change over from CFC propellants to butane it is even more essential than heretofore that propellant not leak from the container.

## BRIEF DESCRIPTION OF THE INVENTION

According to the present invention there is provided a method of making an aerosol container of synthetic plastics material, which method comprises the steps of:

making a pre-form from the synthetic plastics material in an injection moulding machine, the pre-form having a body portion and a neck portion;

heat-setting the neck portion of the pre-form by heating it to above heat-setting temperature and mechanically resisting the tendency of the heated neck portion to shrink; and

forming the pre-form which has a heat-set neck into an aerosol container in a blow moulding machine.

The method can further include the steps of heating the neck portion of the injection moulded pre-form to above the softening temperature of the plastics material, enclosing the heated neck portion of the pre-form in the cavity of a mould and inserting a plug into said neck portion thereby to mould the neck portion to its final shape, and cooling said neck portion by cooling said plug and mould. Heating of the pre-form is preferably achieved by conveying it past heating means before moulding said neck to said final shape.

The blow moulding procedure can include the steps of conveying the pre-form past heating means to heat said body portion of the pre-form, inserting a mandrel of a blow moulding machine into the heated pre-form and enclosing the pre-form by means of a blow mould, blowing the pre-form into the form of a container by stretching it axially and expanding it radially, and cooling the blow mould thereby to cool the blown container.

Subsequent to the blow moulding step, the blown container can be placed in a heated mould to raise the temperature of the body portion of the blown container to above heat setting temperature and maintaining a positive pressure within the blown container as it is heated thereby to prevent collapse of the heated container, such heating relieving stresses in the blown container. After having raised the temperature of the blown container sufficiently to relieve stresses, a liquid is sprayed onto the inner face of said blown container thereby to shock cool the container.

## DETAILED DESCRIPTION OF THE INVENTION

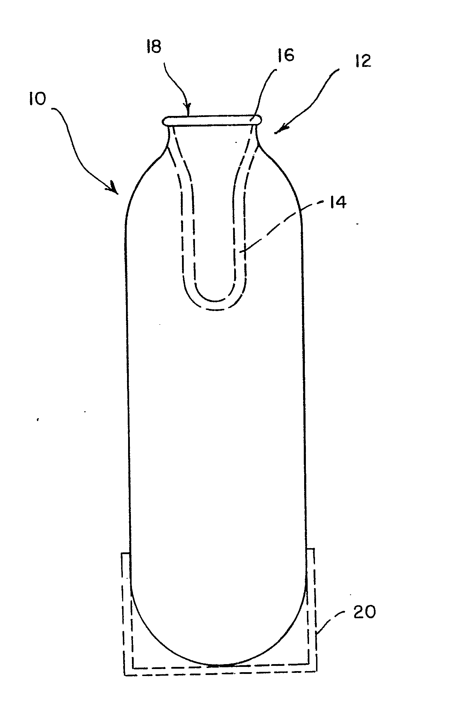

The invention will now be described in more detail, by way of example, with reference to the accompanying drawing, the single Figure of which is a side view of an aerosol container.

The solid lines in the drawing indicate an aerosol container 10 of a suitable synthetic plastics material such as PET or Nylon which is able to withstand the pressure of an aerosol propellant.

To produce the aerosol container 10, a pre-form is made in an injection moulding machine, this being a first stage of the manufacturing process. The shape of such pre-form is indicated in dotted lines in the drawing. The pre-form has a neck portion 12 and a body portion 14, the neck portion being formed with a rim 16 which extends peripherally of a mouth 18 leading into the hollow interior of the pre-form. The pre-form emerging from the injection moulding machine is left to cool to room temperature. Preferably cooled pre-forms are accumulated to provide a supply of pre-forms.

In a second stage of the manufacturing process, pre-forms are taken from the supply of injection moulded pre-forms at random and their necks are heat-set. This is achieved by supporting the pre-forms on a conveyor having grippers which locate the pre-forms. The conveyor moves the pre-forms past heating means. The heating means are preferably radiant heaters but hot air can be blown onto the pre-forms. Only the neck portions of the pre-forms are heated and to ensure even heating the pre-forms are rotated about their vertical axes as they pass between two rows of heaters or two sets of hot air nozzles. To prevent the temperature of the body portions from rising undesirably cold air can be blown onto them.

A mould comprising two half shells closes onto the heated neck portion of the pre-form. The upper surface of the rim 16 is at this stage exposed and a plug is then inserted into the pre-form from above. The plug has an external flange which presses down on the rim 16. The plug and shells now form a cavity which is of the desired final configuration of the neck portion. The softened neck portion is moulded to final configuration by the plug and shells and the neck portion is simultaneously heat-set.

If the material used is PET (polyethyleneterephtalate) then the neck portion has its temperature raised to between 70 and 90 degrees Celsius before it is enclosed in the cavity. The heatset pre-form is then placed in a supply of pre-forms and its temperature allowed to return to ambient temperature.

If the plastics material is not pigmented then the neck portion changes from transparent to opaque as the structure of the material of the neck portion alters from amorphous to partially crystallin.

The pre-forms with heat set necks are then conveyed to a blow moulding machine. Prior to reaching the blow moulding machine the body portions of the pre-forms are heated, by means of radiant heaters, to soften them. To prevent the neck portions increasing in temperature they can be cooled, for example, by blowing cold air over them. However, merely shielding the neck portions from said radiant heaters is sufficient to prevent their temperature increasing unduly. The pre-forms are placed with the neck portions lowermost on the mandrels of a blow moulding machine and are blown so as to expand and stretch them, the longitudinal stretching biaxially orientating the plastics material. The walls of the mould are cooled so that, once the pre-form has been expanded, the container thus formed is cooled.

The container is now in its final shape but the body portion is not heat stabilized.

In a final stage of the method each container is placed in a heated mould and its temperature increased sufficiently to relieve the stresses resulting from biaxial orientation in the blowing stage. To prevent the cylindrical walls or hemispherical end of the body portion collapsing inwardly, the interior of the container is maintained under positive pressure. This holds the cylindrical wall and the hemispherical end firmly against the mould wall. This has the effect of increasing the rate of heating as the cylindrical wall and the container end are in close contact with the mould surface

After a short period in the mould during which period heating takes place, water or other suitable liquid is sprayed onto the inner surface of the body portion and onto the inner surface of the hemispherical end of the body portion. This shock cools the body portion which takes on a pseudo-crystallin structure during the period it is in the mould. The resultant container is entirely heat stabilised.

After it has emerged from the heat stabilization mould, the aerosol container 10 is filled with an active ingredient and an aerosol propellant and an aerosol container top (not shown) is fitted by crimping it onto the rim 16.

It will be seen that the end of the illustrated container 10 has a hemispherical shape so that it is better able to withstand the pressure of an aerosol propellant. If desired, the container may be provided at the bottom with a base 20 which is pressed-on or otherwise secured eg by adhesive and which enables the container to stand upright on a flat supporting surface. To obviate the use of the base 20, the end of the container can be moulded with a ring of protrusions which form a base on which it can stand. Thus the end of the container, instead of being constituted by a single hemisphere, is constituted by an array of hemispheres.

## Claims

1. A method of making an aerosol container of synthetic plastics material, which method comprises the steps of:
making a pre-form from the synthetic plastics material in an injection moulding machine, the pre-form having a body portion and a neck portion;

heat-setting the neck portion of the pre-form by heating it to above heat-setting temperature and mechanically resisting the tendency of the heated neck portion to shrink; and

forming the pre-form which has a heat-set neck into an aerosol container in a blow moulding machine.

2. A method according to claim 1 and characterised by the steps of heating the neck portion of the injection moulded pre-form to above the softening temperature of the plastics material, enclosing the heated neck portion of the pre-form in the cavity of a mould and inserting a plug into said neck portion thereby to mould the neck portion to its final shape, and cooling said neck portion by cooling said plug and mould.

3. A method according to claim 2, characterised in that the neck portion of the pre-form is heated by conveying it past heating means before moulding said neck to said final shape.

4. A method according to claim 1, 2 or 3, and characterised by the steps of conveying the pre-form past heating means to heat said body portion of the pre-form, inserting a mandrel of a blow moulding machine into the heated pre-form and enclosing the pre-form by means of a blow mould, blowing the pre-form into the form of a container by stretching it axially and expanding it radially, and cooling the blow mould thereby to cool the blown container.

5. A method according to any one of claim 1 to 4 and characterised by the steps of placing the blown container in a heated mould to raise the temperature of the body portion of the blown container to above heat setting temperature and maintaining a positive pressure within the blown container as it is heated thereby to prevent collapse of the heated container, such heating relieving stresses in the blown container.

6. A method according to claim 5, characterised in that a liquid is sprayed onto the inner face of said blown container whilst it is in the mould and after it has been heated in said mould thereby to shock cool the container.

7. An aerosol container when manufactured by the method claimed in any preceding claim.

## DOCUMENTS CONSIDERED TO BE RELEVANT

EP 89110920.9

| Category | Citation of document with indication, where appropriate, of relevant passages | Relevant to claim | CLASSIFICATION OF THE APPLICATION (Int. Cl.4) |
|---|---|---|---|
| A | US - A - 4 412 966 (YOSHINO) <br> * Claims 1-4; fig. 7 * <br> -- | 1-5 | B 29 C 49/06 <br> B 65 D 83/38 <br> //B 29 K 67:00 |
| A | US - A - 4 379 099 (OTA) <br> * Column 2, lines 18-21; claims 1,5,6 * <br> -- | 1,2 | |
| A | DE - A - 2 108 789 (HENCH) <br> * Page 8, lines 7ff * <br> -- | 1,7 | |
| A | DE - A1 - 3 044 928 (AOKI) <br> * Totality * <br> ---- | | |
| | | | **TECHNICAL FIELDS SEARCHED (Int. Cl.4)** |
| | | | B 29 C <br> B 65 D |

The present search report has been drawn up for all claims

| Place of search | Date of completion of the search | Examiner |
|---|---|---|
| VIENNA | 15-09-1989 | REININGER |